# EUROPEAN PATENT APPLICATION

(11) **EP 4 699 838 A1**
(43) Date of publication of application: **25.02.2026**
(21) Application number: 25193774.4
(22) Date of filing: 04.08.2025
(51) Int. Cl.: B60K 1/04, B62D 21/11, B62D 21/15, B60K 1/02, B60K 1/00

(54) **VEHICLE LOWER STRUCTURE**

(30) Priority: 20.08.2024 JP 2024139017
(71) Applicant: TOYOTA JIDOSHA KABUSHIKI KAISHA, Toyota-shi, Aichi-ken 471-8571 (JP)
(72) Inventor: HIRAI, Makoto, Toyota-shi, Aichi-ken,, 471-8571 (JP)
(74) Representative: Winter, Brandl - Partnerschaft mbB

(57) **Abstract**

A vehicle lower structure includes an electromechanical integrated unit (20A, 20B). The electromechanical integrated unit (20A, 20B) includes a motor (21A, 21B), and an electric power control device (22A, 22B) configured to supply electric power to the motor (21A, 21B). The electromechanical integrated unit (20A, 20B) is fastened to a suspension member (30A, 30B). The electromechanical integrated unit (20A, 20B) is disposed outward of an outer end of the battery pack (10) in a vehicle-length direction. The suspension member (30A, 30B) is fastened to the battery pack (10). The battery pack (10) and the electromechanical integrated unit (20A, 20B) are spaced apart from each other in the vehicle-length direction.

## Description

### BACKGROUND OF THE INVENTION

### 1. Field of the Invention

The present disclosure relates to a vehicle lower structure.

### 2. Description of Related Art

Japanese Unexamined Patent Application Publication No. 2023-122993 (JP 2023-122993 A) discloses a lower structure of an electrified vehicle including a traction motor, and a battery that supplies electric power to the traction motor. In the lower structure, a suspension member that supports a suspension device is fastened to a battery protection frame that protects the battery.

### SUMMARY OF THE INVENTION

The battery that supplies electric power to the motor stores the electric power. The motor is supplied with high-voltage electric power from the battery. At the time of a collision of the vehicle, it is necessary to protect not only the battery but also the motor. For this, there is room for ingenuity in the lower structure of the electrified vehicle.

A vehicle lower structure according to an aspect of the present disclosure is a vehicle lower structure in an electrified vehicle configured to drive drive wheels with electric power stored in a battery cell inside a battery pack. The vehicle lower structure includes the battery pack disposed under a floor. The vehicle lower structure includes an electromechanical integrated unit. The electromechanical integrated unit includes a motor that is a power source configured to drive the drive wheels, and an electric power control device configured to supply electric power to the motor. The vehicle lower structure includes a suspension member. In the vehicle lower structure, the electromechanical integrated unit is fastened to the suspension member. In the vehicle lower structure, the electromechanical integrated unit is disposed outward of an outer end of the battery pack in a vehicle-length direction. The suspension member is fastened to the battery pack. The battery pack and the electromechanical integrated unit are spaced apart from each other in the vehicle-length direction.

The vehicle lower structure can reduce the possibility of a collision between the electromechanical integrated unit and the battery pack.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram showing a vehicle lower structure in an electrified vehicle of a first embodiment;
FIG. 2 is a schematic diagram showing the configuration of an electrical system and a drive system in the electrified vehicle shown in FIG. 1;
FIG. 3 is an enlarged view showing the vehicle lower structure at a rear portion of the electrified vehicle shown in FIG. 1;
FIG. 4 is a partial sectional view of the vehicle lower structure taken along line IV-IV that passes through the center of a fastening member in FIG. 3;
FIG. 5 is a sectional view of the vehicle lower structure taken along line V-V that passes through the center of the fastening member in FIG. 3;
FIG. 6 is an enlarged view showing a vehicle lower structure at a rear portion of an electrified vehicle of a second embodiment; and
FIG. 7 is a sectional view of the vehicle lower structure taken along line VII-VII that passes through the center of a fastening member in FIG. 6.

### DETAILED DESCRIPTION OF EMBODIMENTS

### First Embodiment

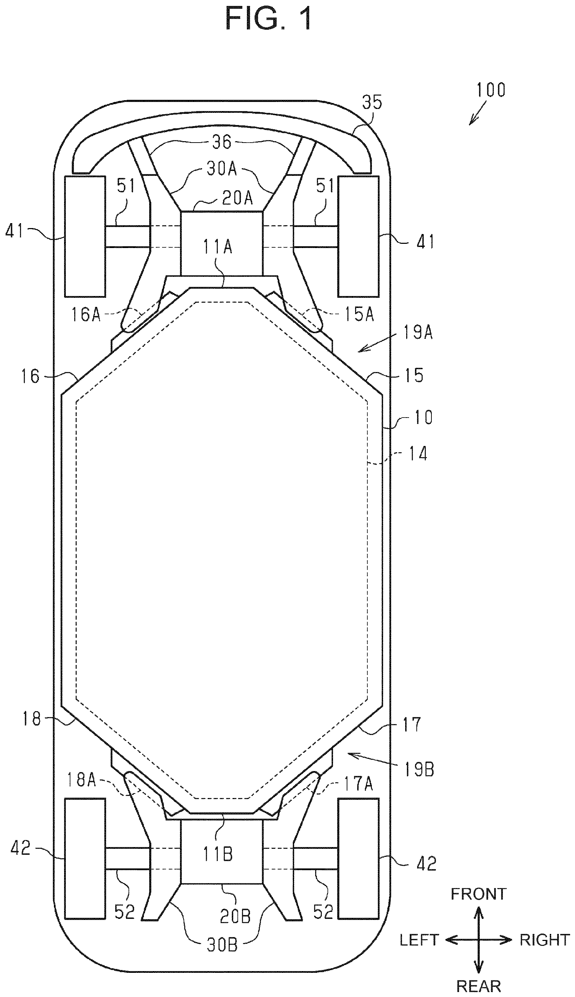

Hereinbelow, a vehicle lower structure according to a first embodiment will be described with reference to FIGS. 1 to 5. In the following description, "front", "rear", "right", "left", "up", and "down" refer to "front", "rear", "right", "left", "up", and "down" when viewed from an occupant facing forward of a vehicle. The right-left direction coincides with the vehicle-width direction.

As shown in FIG. 1, an electrified vehicle 100 includes a battery pack 10 under a floor, which is not shown. The electrified vehicle 100 includes front wheels 41, rear wheels 42, a first drive shaft 51, a second drive shaft 52, a first electromechanical integrated unit 20A, a second electromechanical integrated unit 20B, a first suspension member 30A, and a second suspension member 30B. The first electromechanical integrated unit 20A and the second electromechanical integrated unit 20B are disposed outward of outer ends of the battery pack 10 in the vehicle-length direction. The battery pack 10 and the first electromechanical integrated unit 20A are spaced apart from each other in the vehicle-length direction. The battery pack 10 and the second electromechanical integrated unit 20B are spaced apart from each other in the vehicle-length direction. A plurality of battery cells 14 is housed inside the battery pack 10. In FIGS. 1, 2, and 4, the battery cells 14 that are laid over the inside of the battery pack 10 are collectively surrounded and shown by a broken line.

### Electrical System and Drive System of Electrified Vehicle 100

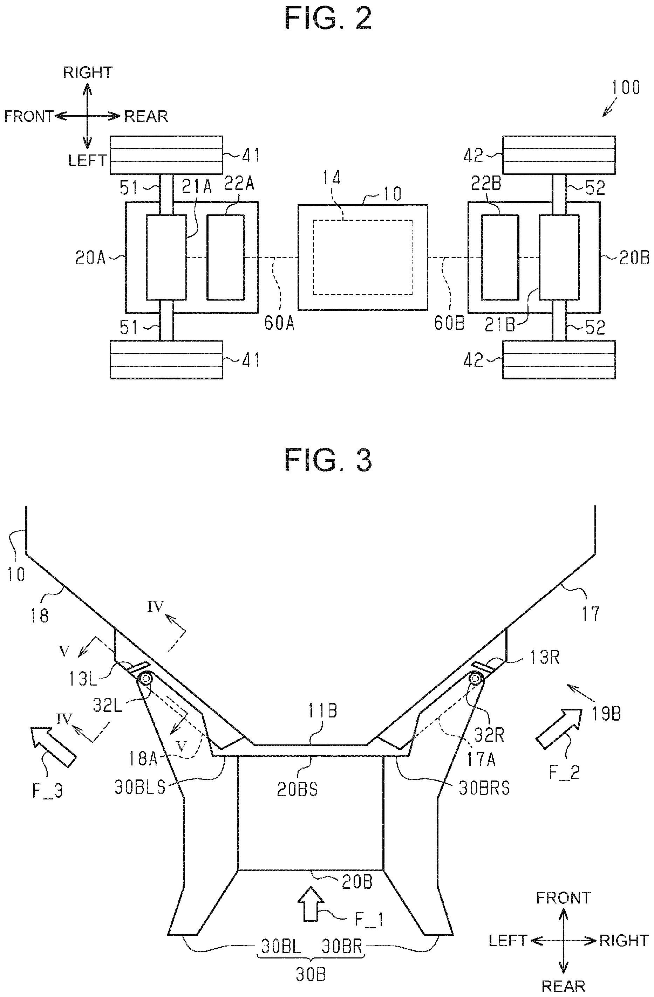

As shown in FIG. 2, the electrified vehicle 100 includes the battery pack 10, the first electromechanical integrated unit 20A, and the second electromechanical integrated unit 20B. The first electromechanical integrated unit 20A includes a first motor 21A, and a first electric power control device 22A. The second electromechanical integrated unit 20B includes a second motor 21B, and a second electric power control device 22B.

Broken lines in FIG. 2 show wire harnesses. The battery pack 10 and the first electric power control device 22A are electrically connected to each other by a wire harness 60A. The first electric power control device 22A and the first motor 21A are electrically connected to each other by a wire harness. The battery pack 10 and the second electric power control device 22B are electrically connected to each other by a wire harness 60B. The second electric power control device 22B and the second motor 21B are electrically connected to each other by a wire harness.

As shown in FIG. 1, the wire harness 60A through which electric power is supplied from the battery pack 10 to the first electromechanical integrated unit 20A is not disposed in a space between a central portion 11A that is a front end of the battery pack 10 in the vehicle-length direction and the first electromechanical integrated unit 20A. The wire harness 60B through which electric power is supplied from the battery pack 10 to the second electromechanical integrated unit 20B is not disposed in a space between a central portion 11B that is a rear end of the battery pack 10 in the vehicle-length direction and the second electromechanical integrated unit 20B.

The first motor 21A and the second motor 21B shown in FIG. 2 are power sources that drive drive wheels. The battery cells 14 inside the battery pack 10 store electric power to be supplied to the first motor 21A and the second motor 21B. The electrified vehicle 100 drives the drive wheels with the electric power stored in the battery cells 14. The first motor 21A drives the front wheels 41 through the first drive shaft 51. That is, the front wheels 41 are the drive wheels. The second motor 21B drives the rear wheels 42 through the second drive shaft 52. That is, the rear wheels 42 are the drive wheels.

The first electric power control device 22A is an electric power control device that supplies electric power to the first motor 21A. The first electric power control device 22A includes an inverter that converts direct current electric power from the battery cells 14 into alternating current electric power and supplies the converted electric power to the first motor 21A. The second electric power control device 22B is an electric power control device that supplies electric power to the second motor 21B. The second electric power control device 22B includes an inverter that converts direct current electric power from the battery cells 14 into alternating current electric power and supplies the converted electric power to the second motor 21B.

### Vehicle Lower Structure of Electrified Vehicle 100 forward of Center of Vehicle

As shown in FIG. 1, the battery pack 10 includes a first tapered portion 19A having a length in the vehicle-width direction that increases from the front side toward the center in the vehicle-length direction in vehicle top view. The first tapered portion 19A includes the central portion 11A that extends in the vehicle-width direction. As described above, the central portion 11A is the front end of the battery pack 10 in the vehicle-length direction. The first tapered portion 19A includes an inclined portion 15 and an inclined portion 16. The inclined portion 15 and the inclined portion 16 are inclined outward in the vehicle-width direction from the central portion 11A toward the rear side in the vehicle-length direction. The inclined portion 15 and the inclined portion 16 are connected to side faces of the battery pack 10. The inclined portion 15 is located rightward of the central portion 11A in the vehicle-width direction. The inclined portion 16 is located leftward of the central portion 11A in the vehicle-width direction.

The inclined portion 15 includes a flange 15A that extends outward in the vehicle-length direction. The inclined portion 16 includes a flange 16A that extends outward in the vehicle-length direction. A portion indicated by a broken line in the flange 15A is located below the first suspension member 30A. A portion indicated by a broken line in the flange 16A is located below the first suspension member 30A. The first suspension member 30A is fastened to the battery pack 10 at the flange 15A and the flange 16A. That is, the first suspension member 30A is fastened to the battery pack 10 at the inclined portion 15 and the inclined portion 16. The first suspension member 30A is fastened to the first electromechanical integrated unit 20A.

The electrified vehicle 100 includes a pair of right and left shock absorbing members 36 that is attached to the front end of the first suspension member 30A. The electrified vehicle 100 includes a bumper reinforcement 35 that is laid between front ends of the right and left shock absorbing members 36. The bumper reinforcement 35 extends in the vehicle-width direction.

### Vehicle Lower Structure of Electrified Vehicle 100 Rearward of Center of Vehicle

As shown in FIG. 1, the battery pack 10 includes a second tapered portion 19B having a length in the vehicle-width direction that increases from the rear side toward the center in the vehicle-length direction in vehicle top view. The second tapered portion 19B includes the central portion 11B that extends in the vehicle-width direction. As described above, the central portion 11B is the rear end of the battery pack 10 in the vehicle-length direction. The second tapered portion 19B includes an inclined portion 17 and an inclined portion 18. The inclined portion 17 and the inclined portion 18 are inclined outward in the vehicle-width direction from the central portion 11B toward the front side in the vehicle-length direction. The inclined portion 17 and the inclined portion 18 are connected to the side faces of the battery pack 10. The inclined portion 17 is located rightward of the central portion 11B in the vehicle-width direction. The inclined portion 18 is located leftward of the central portion 11B in the vehicle-width direction.

The inclined portion 17 includes a flange 17A that extends outward in the vehicle-length direction. The inclined portion 18 includes a flange 18A that extends outward in the vehicle-length direction. A portion indicated by a broken line in the flange 17A is located below the second suspension member 30B. A portion indicated by a broken line in the flange 18A is located below the second suspension member 30B. The second suspension member 30B is fastened to the battery pack 10 at the flange 17A and the flange 18A. That is, the second suspension member 30B is fastened to the battery pack 10 at the inclined portion 17 and the inclined portion 18. The second suspension member 30B is fastened to the second electromechanical integrated unit 20B.

### Mode of Fastening between Second Suspension Member 30B and Battery Pack 10

Hereinbelow, a mode of fastening between the second suspension member 30B and the battery pack 10 will be described as a representative example. A mode of fastening between the first suspension member 30A and the battery pack 10 is similar to the mode of fastening between the second suspension member 30B and the battery pack 10.

FIG. 3 is an enlarged view of the second tapered portion 19B and its surroundings in FIG. 1. As shown in FIG. 3, the second suspension member 30B includes a side member 30BR, and a side member 30BL. The side member 30BR is fastened to the second electromechanical integrated unit 20B. The side member 30BL is fastened to the second electromechanical integrated unit 20B. That is, the second suspension member 30B and the second electromechanical integrated unit 20B are integrated together. Similarly, the first suspension member 30A and the first electromechanical integrated unit 20A are integrated together.

The side member 30BR has a face 30 BRS facing the battery pack 10. The side member 30BL has a face 30BLS facing the battery pack 10. The second electromechanical integrated unit 20B has a face 20BS facing the battery pack 10. The length of the central portion 11B in the vehicle-width direction is shorter than the sum of the length of the face 30BRS in the vehicle-width direction, the length of the face 30BLS in the vehicle-width direction, and the length of the face 20BS in the vehicle-width direction. That is, the length of the central portion 11B in the vehicle-width direction is shorter than the length of a portion of the second suspension member 30B, the portion extending in the vehicle-width direction. Similarly, the length of the central portion 11A shown in FIG. 1 in the vehicle-width direction is shorter than the length of a portion of the first suspension member 30A, the portion extending in the vehicle-width direction.

The side member 30BR and the flange 17A are fastened to each other in the vehicle-height direction with a fastening member 32R. The side member 30BL and the flange 18A are fastened to each other in the vehicle-height direction with a fastening member 32L. That is, the second suspension member 30B and the flange 17A are fastened to each other in the vehicle-height direction with the fastening member 32R. The fastening member 32R is, for example, a screw. The second suspension member 30B and the flange 18A are fastened to each other in the vehicle-height direction with the fastening member 32L. The fastening member 32L is, for example, a screw.

### Mode of Fastening between Side Member 30BL and Battery Pack 10

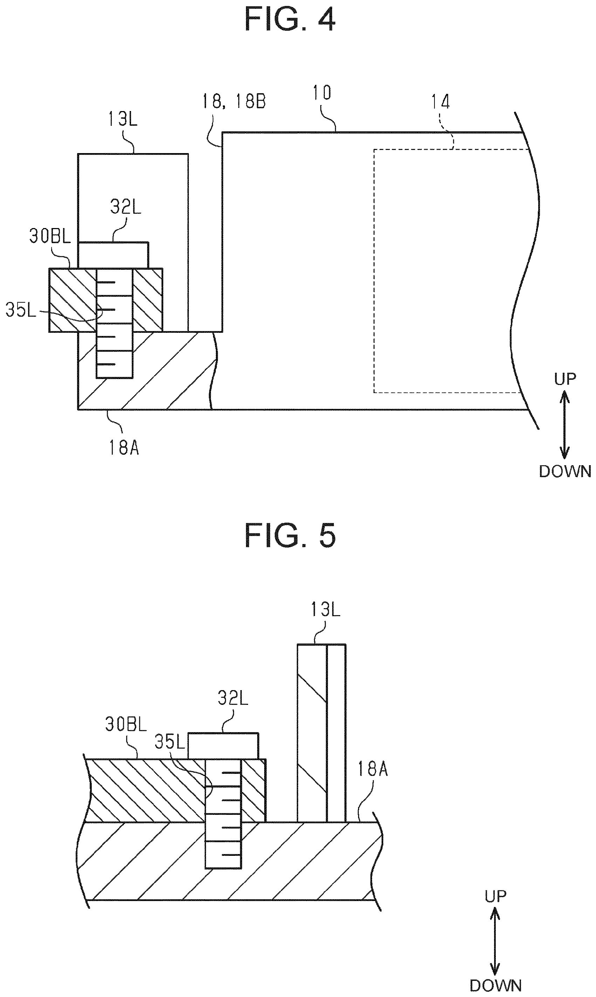

Hereinbelow, a mode of fastening between the side member 30BL and the battery pack 10 will be described as a representative example. FIG. 4 is a partial sectional view of the vehicle lower structure taken along line IV-IV that passes through the center of the fastening member 32L in FIG. 3. Line IV-IV is a line that is perpendicular to the inclined portion 18. As shown in FIG. 4, an upper end of the flange 18A in the vehicle-height direction is located at a position lower than an upper end of the battery pack 10 in the vehicle-height direction. The inclined portion 18 includes the flange 18A, and a riser portion 18B that extends from an upper face of the flange 18A to the upper end of the battery pack 10. The side member 30BL that is a part of the second suspension member 30B is disposed on the upper face of the flange 18A in the vehicle-height direction.

The side member 30BL is provided with a through-hole 35L that extends in the vehicle-height direction. The side member 30BL and the flange 18A are fastened to each other with the fastening member 32L that is disposed in the through-hole 35L from above in the vehicle-height direction. The side member 30BL is fastened to the battery pack 10 at the flange 18A. The flange 18A includes a wall 13L that projects upward in the vehicle-height direction.

### Wall 13L provided on Flange 18A

FIG. 5 is a sectional view of the vehicle lower structure taken along line V-V that passes through the center of the fastening member 32L in FIG. 3. Line V-V is a straight line that passes through the wall 13L. Line V-V is the straight line that is perpendicular to line IV-IV. As shown in FIG. 5, the wall 13L faces the side member 30BL. That is, the wall 13L faces the second suspension member 30B. The wall 13L is provided at a position where, when the fastening member 32L becomes detached and the second suspension member 30B moves toward the battery pack 10, the second suspension member 30B comes into contact with the wall 13L before coming into contact with the riser portion 18B shown in FIG. 4.

### Mode of Fastening between Side Member 30BR and Battery Pack 10

A mode of fastening between the side member 30BR and the battery pack 10 is similar to the mode of fastening between the side member 30BL and the battery pack 10. That is, the inclined portion 17 includes the flange 17A, and a riser portion that extends from an upper face of the flange 17A to the upper end of the battery pack 10. The side member 30BR that is a part of the second suspension member 30B is disposed on the upper face of the flange 17A in the vehicle-height direction. The side member 30BR is provided with a through-hole that extends in the vehicle-height direction. The side member 30BR and the flange 17A are fastened to each other with the fastening member 32R that is disposed in the through-hole from above in the vehicle-height direction. The side member 30BR is fastened to the battery pack 10 at the flange 17A. The flange 17A is provided with a wall 13R that projects upward in the vehicle-height direction. The wall 13R is provided at a position where, when the fastening member 32R becomes detached and the second suspension member 30B moves toward the battery pack 10, the second suspension member 30B comes into contact with the wall 13R before coming into contact with the riser portion provided on the inclined portion 17.

In this manner, the second suspension member 30B is fastened to the battery pack 10 at the flange 17A and the flange 18A.

### Mode of Fastening between First Suspension Member 30A and Battery Pack 10

The first suspension member 30A is fastened to the battery pack 10 in a mode similar to the mode of fastening between the second suspension member 30B and the battery pack 10. That is, the inclined portion 15 includes the flange 15A, and a riser portion that extends from an upper face of the flange 15A to the upper end of the battery pack 10. The inclined portion 16 includes the flange 16A, and a riser portion that extends from an upper face of the flange 16A to the upper end of the battery pack 10. The first suspension member 30A is provided with a plurality of through-holes extending in the vehicle-height direction. The first suspension member 30A is disposed on the upper faces of the flange 15A and the flange 16A in the vehicle-height direction. The first suspension member 30A and the flange 15A are fastened to each other with a fastening member that is disposed in the through-hole from above in the vehicle-height direction. That first suspension member 30A and the flange 16A are fastened to each other with a fastening member that is disposed in the through-hole from above in the vehicle-height direction. The flange 15A includes a wall that projects upward in the vehicle-height direction. The flange 16A includes a wall that projects upward in the vehicle-height direction. Each of the walls faces the first suspension member 30A. Each of the walls is provided at a position where, when the fastening member becomes detached and the first suspension member 30A moves toward the battery pack 10, the first suspension member 30A comes into contact with the wall before coming into contact with the riser portion provided on the inclined portion 15 or the riser portion provided on the inclined portion 16.

### Actions of First Embodiment

In the vehicle lower structure, the first electromechanical integrated unit 20A and the battery pack 10 are integrated together at a distance from each other through the first suspension member 30A. Thus, it is easy to maintain the distance between the first electromechanical integrated unit 20A and the battery pack 10 at the time of a collision. In the vehicle lower structure, the second electromechanical integrated unit 20B and the battery pack 10 are integrated together at a distance from each other through the second suspension member 30B. Thus, it is easy to maintain the distance between the second electromechanical integrated unit 20B and the battery pack 10 at the time of a collision.

### Effects of First Embodiment

(1-1) The vehicle lower structure can reduce the possibility of a collision between the first electromechanical integrated unit 20A and the battery pack 10. The vehicle lower structure can reduce the possibility of a collision between the second electromechanical integrated unit 20B and the battery pack 10.
(1-2) The second suspension member 30B and the second electromechanical integrated unit 20B are disposed rearward of the battery pack 10 in the vehicle-length direction. The battery pack 10 includes the second tapered portion 19B having a length in the vehicle-width direction that increases from the rear side toward the center in the vehicle-length direction in vehicle top view. The second tapered portion 19B includes the central portion 11B that is the rear end of the battery pack 10 in the vehicle-length direction and extends in the vehicle-width direction. The second tapered portion 19B includes the inclined portion 17 and the inclined portion 18 that are inclined outward in the vehicle-width direction from the central portion 11B toward the front side in the vehicle-length direction and connected to the side faces of the battery pack 10. The second suspension member 30B is fastened to the battery pack 10 at the inclined portion 17 and the inclined portion 18. With the above configuration, as shown in FIG. 3, when an impact is applied to the second suspension member 30B from outside in the vehicle-length direction, a force F_1 that moves the second suspension member 30B toward the center in the vehicle-length direction acts on the second suspension member 30B. The force F_1 is converted into a force F_2 that acts in a direction along the inclined portion 17 and a force F_3 that acts in a direction along the inclined portion 18, and escapes outward in the vehicle-width direction. This reduces the impact transmitted from the second suspension member 30B to the battery pack 10. Accordingly, when an impact is applied to the second suspension member 30B from outside in the vehicle-length direction, the vehicle lower structure can reduce the impact transmitted from the second suspension member 30B to the battery pack 10.
(1-3) The first suspension member 30A and the first electromechanical integrated unit 20A are disposed forward of the battery pack 10 in the vehicle-length direction. The battery pack 10 includes the first tapered portion 19A having a length in the vehicle-width direction that increases from the front side toward the center in the vehicle-length direction in vehicle top view. The first tapered portion 19A includes the central portion 11A that is the front end of the battery pack 10 in the vehicle-length direction and extends in the vehicle-width direction. The first tapered portion 19A includes the inclined portion 15 and the inclined portion 16 that are inclined outward in the vehicle-width direction from the central portion 11A toward the rear side in the vehicle-length direction and connected to the side faces of the battery pack 10. The first suspension member 30A is fastened to the battery pack 10 at the inclined portion 15 and the inclined portion 16. With the above configuration, part of the impact applied to the battery pack 10 from the front side in the vehicle-length direction through the first suspension member 30A escapes outward in the vehicle-width direction along the inclined portion 15 and the inclined portion 16. This reduces the impact transmitted from the first suspension member 30A to the battery pack 10. Accordingly, when an impact is applied to the first suspension member 30A from outside in the vehicle-length direction, the vehicle lower structure can reduce the impact transmitted from the first suspension member 30A to the battery pack 10.
(1-4) The inclined portion 17 includes the flange 17A extending outward in the vehicle-length direction. The inclined portion 18 includes the flange 18A extending outward in the vehicle-length direction. The upper end of the flange 17A in the vehicle-height direction and the upper end of the flange 18A in the vehicle-height direction are located at the positions lower than the upper end of the battery pack 10 in the vehicle-height direction. The side member 30BR that is a part of the second suspension member 30B is disposed on the upper face of the flange 17A in the vehicle-height direction. The side member 30BL that is a part of the second suspension member 30B is disposed on the upper face of the flange 18A in the vehicle-height direction. Thus, when the second suspension member 30B moves toward the battery pack 10, the second suspension member 30B comes into contact with the inclined portion 17 and the inclined portion 18 of the battery pack 10. Thus, it is possible to restrain the second electromechanical integrated unit 20B and the battery pack 10 from coming close to each other. The vehicle lower structure can reduce the possibility of a collision between the second electromechanical integrated unit 20B and the battery pack 10 when an impact is applied to the electrified vehicle 100 from the rear side thereof.
(1-5) The inclined portion 15 includes the flange 15A extending outward in the vehicle-length direction. The inclined portion 16 includes the flange 16A extending outward in the vehicle-length direction. The upper end of the flange 15A in the vehicle-height direction and the upper end of the flange 16A in the vehicle-height direction are located at the positions lower than the upper end of the battery pack 10 in the vehicle-height direction. The first suspension member 30A is disposed on the upper face of the flange 15A in the vehicle-height direction. The first suspension member 30A is disposed on the upper face of the flange 16A in the vehicle-height direction. Thus, when the first suspension member 30A moves toward the battery pack 10, the first suspension member 30A comes into contact with the inclined portion 15 and the inclined portion 16 of the battery pack 10. Thus, it is possible to restrain the first electromechanical integrated unit 20A and the battery pack 10 from coming close to each other. The vehicle lower structure can reduce the possibility of a collision between the first electromechanical integrated unit 20A and the battery pack 10 when an impact is applied to the electrified vehicle 100 from the front side thereof.
(1-6) The side member 30BL is provided with the through-hole 35L extending in the vehicle-height direction. Similarly, the side member 30BR is provided with the through-hole extending in the vehicle-height direction. The second suspension member 30B and the flange 18A are fastened to each other with the fastening member 32L disposed in the through-hole 35L from above in the vehicle-height direction. The second suspension member 30B and the flange 17A are fastened to each other with the fastening member 32R disposed in the through-hole from above in the vehicle-height direction. The above configuration can restrain the second suspension member 30B and the battery pack 10 from becoming unfastened due to the fastening member falling off.
(1-7) The first suspension member 30A is provided with the through-holes extending in the vehicle-height direction as with the second suspension member 30B. The first suspension member 30A and the flange 15A are fastened to each other with the fastening member disposed in the through-hole from above in the vehicle-height direction. The first suspension member 30A and the flange 16A are fastened to each other with the fastening member disposed in the through-hole from above in the vehicle-height direction. The above configuration can restrain the first suspension member 30A and the battery pack 10 from becoming unfastened due to the fastening member falling off.
(1-8) The flange 17A includes the wall 13R projecting upward in the vehicle-height direction. The flange 18A includes the wall 13L projecting upward in the vehicle-height direction. The wall 13R and the wall 13L face the second suspension member 30B. The wall 13R is provided at the position where, when the fastening member 32R becomes detached and the second suspension member 30B moves toward the battery pack 10, the second suspension member 30B comes into contact with the wall 13R before coming into contact with the riser portion provided on the inclined portion 17. The wall 13L is provided at the position where, when the fastening member 32L becomes detached and the second suspension member 30B moves toward the battery pack 10, the second suspension member 30B comes into contact with the wall 13L before coming into contact with the riser portion 18B. As shown in FIG. 3, when an impact is applied to the second suspension member 30B from outside in the vehicle-length direction, the force F_1 that moves the second suspension member 30B toward the center in the vehicle-length direction acts on the second suspension member 30B. When the second suspension member 30B moves toward the center in the vehicle-length direction, the second suspension member 30B comes into contact with the wall 13R provided on the flange 17A and the wall 13L provided on the flange 18A. The vehicle lower structure can restrain the second suspension member 30B from further moving toward the center in the vehicle-length direction.
(1-9) The flange 15A includes the wall projecting upward in the vehicle-height direction. The flange 16A includes the wall projecting upward in the vehicle-height direction. Each of the walls faces the first suspension member 30A. Each of the walls is provided at the position where, when the fastening member becomes detached and the first suspension member 30A moves toward the battery pack 10, the first suspension member 30A comes into contact with the wall before coming into contact with the riser portion provided on the inclined portion 15 or the riser portion provided on the inclined portion 16. When an impact is applied to the first suspension member 30A from outside in the vehicle-length direction, the force that moves the first suspension member 30A toward the center in the vehicle-length direction acts on the first suspension member 30A. When the first suspension member 30A moves toward the center in the vehicle-length direction, the first suspension member 30A comes into contact with the wall provided on the flange 15A and the wall provided on the flange 16A. The vehicle lower structure can restrain the first suspension member 30A from further moving toward the center in the vehicle-length direction.

### Modifications of First Embodiment

The first embodiment can be implemented with the following modifications. The first embodiment and the following modifications of the first embodiment can be implemented in combination with each other as long as there is no technical contradiction.

The flange 17A in the vehicle lower structure does not have to include the wall 13R. The flange 18A in the vehicle lower structure does not have to include the wall 13L. Even when the flange 17A does not include the wall 13R and the flange 18A does not include the wall 13L, the vehicle lower structure that includes the battery pack 10 including the flange 17A and the flange 18A can reduce the possibility of a collision between the second electromechanical integrated unit 20B and the battery pack 10 when an impact is applied to the second suspension member 30B from outside in the vehicle-length direction. Similarly, the flange 15A in the vehicle lower structure does not have to include the wall. The flange 16A in the vehicle lower structure does not have to include the wall. Even when the flange 15A does not include the wall and the flange 16A does not include the wall, the vehicle lower structure that includes the battery pack 10 including the flange 15A and the flange 16A can reduce the possibility of a collision between the first electromechanical integrated unit 20A and the battery pack 10 when an impact is applied to the first suspension member 30A from outside in the vehicle-length direction.

### Second Embodiment

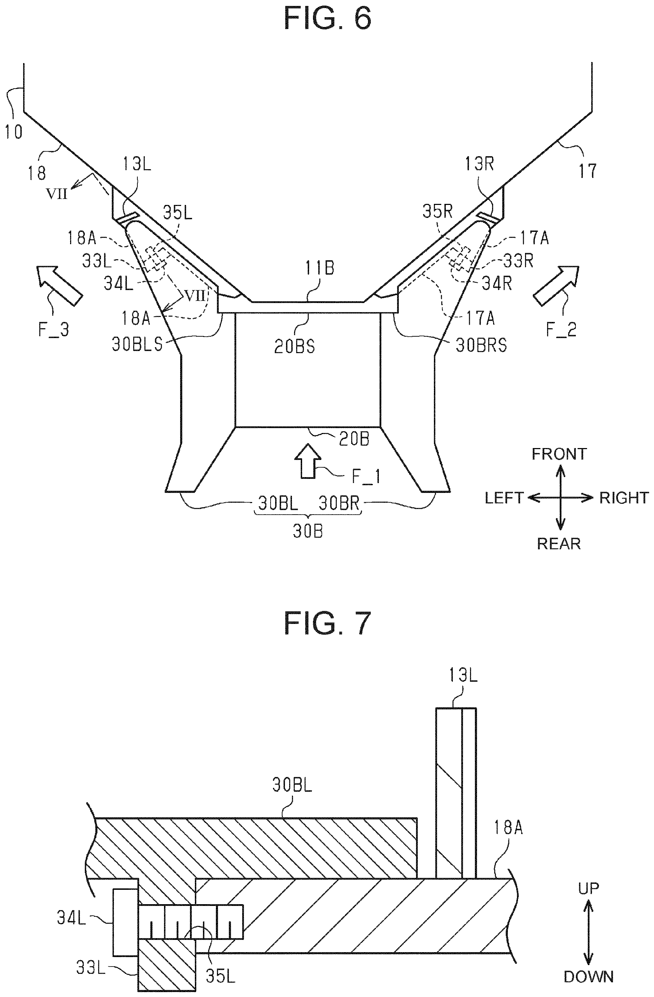

Hereinbelow, a vehicle lower structure according to a second embodiment will be described with reference to FIGS. 6 and 7. In the second embodiment, differences from the first embodiment will be mainly described.

Also in the second embodiment, as with the first embodiment, a mode of fastening between the first suspension member 30A and the battery pack 10 is similar to a mode of fastening between the second suspension member 30B and the battery pack 10. Hereinbelow, the mode of fastening between the second suspension member 30B and the battery pack 10 will be described as representative example.

FIG. 6 is a schematic diagram showing the vehicle lower structure at the rear portion of the electrified vehicle 100 of the second embodiment. Broken lines in FIG. 6 show members that are provided below the second suspension member 30B in the vehicle-height direction. The side member 30BR includes a projection 33R that extends downward in the vertical direction. The side member 30BL includes a projection 33L that extends downward in the vertical direction. That is, the second suspension member 30B includes the projection 33R and the projection 33L that extend downward in the vertical direction. The projection 33R is provided with a through-hole 35R. The projection 33L is provided with a through-hole 35L. The through-hole 35R and the through-hole 35L extend at an inclination relative to the vehicle-length direction such that the through-hole 35R and the through-hole 35L are inclined outward in the vehicle-width direction toward the central side in the vehicle-length direction.

### Mode of Fastening between Second Suspension Member 30B and Battery Pack 10

FIG. 7 is a sectional view of the vehicle lower structure taken along line VII-VII that passes through the center of a fastening member 34L in FIG. 6. As shown in FIG. 7, the side member 30BL is provided with the through-hole 35L that extends in the horizontal direction in the projection 33L. That is, the second suspension member 30B is provided with the through-hole 35L that extends in the horizontal direction in the projection 33L. The projection 33L and the flange 18A are fastened to each other with the fastening member 34L that is disposed in the through-hole 35L. The fastening member 34L is, for example, a screw.

A mode of fastening between the side member 30BR and the battery pack 10 is similar to the mode of fastening between the side member 30BL and the battery pack 10. The side member 30BR is provided with the through-hole 35R that extends in the horizontal direction in the projection 33R. That is, the second suspension member 30B is provided with the through-hole 35R that extends in the horizontal direction in the projection 33R. The projection 33R and the flange 17A are fastened to each other with a fastening member 34R that is disposed in the through-hole 35R. The fastening member 34R is, for example, a screw. The side member 30BR is fastened to the battery pack 10 at the flange 17A. That is, the second suspension member 30B is fastened to the battery pack 10 at the flange 17A and the flange 18A.

### Mode of Fastening between First Suspension Member 30A and Battery Pack 10

The first suspension member 30A is fastened to the battery pack 10 in a mode similar to the mode of fastening between the second suspension member 30B and the battery pack 10. That is, the first suspension member 30A is provided with two projections that extend downward in the vertical direction. Each of the projections is provided with a through-hole that extends in the horizontal direction. The through-hole extends at an inclination relative to the vehicle-length direction such that the through-hole is inclined outward in the vehicle-width direction toward the central side in the vehicle-length direction. One of the projections and the flange 15A are fastened to each other with a fastening member that is disposed in the through-hole. The other one of the projections and the flange 16A are fastened to each other with a fastening member that is disposed in the through-hole.

### Actions of Second Embodiment

When an impact is applied to the second suspension member 30B from outside in the vehicle-length direction, a horizontal force acts on the second suspension member 30B. When the horizontal force acts on the fastening member that fastens the second suspension member 30B and the battery pack 10 to each other in the vehicle-height direction, the fastening member may be sheared. When the fastening member 34R is horizontally disposed in the second suspension member 30B, the force applied in the direction of shearing the fastening member 34R is smaller than that when the fastening member 34R is disposed in the vehicle-height direction in the second suspension member 30B. When the fastening member 34L is horizontally disposed in the second suspension member 30B, the force applied in the direction of shearing the fastening member 34L is smaller than that when the fastening member 34L is disposed in the vehicle-height direction in the second suspension member 30B.

When an impact is applied to the first suspension member 30A from outside in the vehicle-length direction, a horizontal force acts on the first suspension member 30A. When the horizontal force acts on the fastening member that fastens the first suspension member 30A and the battery pack 10 to each other in the vehicle-height direction, the fastening member may be sheared. When the fastening member is horizontally disposed in the first suspension member 30A, the force applied in the direction of shearing the fastening member is smaller than that when the fastening member is disposed in the vehicle-height direction in the first suspension member 30A.

### Effects of Second Embodiment

(2-1) The vehicle lower structure can reduce the possibility of the fastening member 34R that fastens the projection 33R and the flange 17A to each other being sheared when an impact is applied to the electrified vehicle 100 from the rear side thereof. The vehicle lower structure can reduce the possibility of the fastening member 34L that fastens the projection 33L and the flange 18A to each other being sheared when an impact is applied to the electrified vehicle 100 from the rear side thereof. The vehicle lower structure can reduce the possibility of the fastening member that fastens one of the projections provided on the first suspension member 30A and the flange 15A to each other being sheared when an impact is applied to the electrified vehicle 100 from the front side thereof. The vehicle lower structure can reduce the possibility of the fastening member that fastens the other one of the projections provided on the first suspension member 30A and the flange 16A to each other being sheared when an impact is applied to the electrified vehicle 100 from the front side thereof.
(2-2) The through-hole 35R and the through-hole 35L that are provided in the second suspension member 30B extend at an inclination relative to the vehicle-length direction such that the through-hole 35R and the through-hole 35L are inclined outward in the vehicle-width direction toward the central side in the vehicle-length direction. As shown in FIG. 6, part of the force F_1 that is applied to the battery pack 10 from the rear side in the vehicle-length direction through the second suspension member 30B is converted into the force F_2 that acts in the direction along the inclined portion 17 and the force F_3 that acts in the direction along the inclined portion 18, and escapes outward in the vehicle-width direction. The through-hole 35R in the projection 33R extends at an inclination relative to the vehicle-length direction such that the through-hole 35R is inclined outward in the vehicle-width direction toward the central side in the vehicle-length direction. The through-hole 35L in the projection 33L extends at an inclination relative to the vehicle-length direction such that the through-hole 35L is inclined outward in the vehicle-width direction toward the central side in the vehicle-length direction. With the above configuration, when the force F_2 is applied to the fastening member 34R disposed in the through-hole 35R, the force applied in the direction of shearing the fastening member 34R is smaller than that when the fastening member 34R is disposed in the vehicle-height direction. With the above configuration, when the force F_3 is applied to the fastening member 34L disposed in the through-hole 35L, the force applied in the direction of shearing the fastening member 34L is smaller than that when the fastening member 34L is disposed in the vehicle-height direction. The vehicle lower structure can further reduce the possibility of the fastening member 34R and the fastening member 34L being sheared at the time of a collision.
(2-3) Part of the impact that is applied to the battery pack 10 from the front side in the vehicle-length direction through the first suspension member 30A is converted into the force that acts in the direction along the inclined portion 15 and the force that acts in the direction along the inclined portion 16, and escapes outward in the vehicle-width direction. The through-hole in each of the projections provided on the first suspension member 30A extends at an inclination relative to the vehicle-length direction such that the through-hole is inclined outward in the vehicle-width direction toward the central side in the vehicle-length direction. With the above configuration, when a force is applied to the fastening member that is disposed in the through-hole in each of the projections provided on the first suspension member 30A, the force applied in the direction of shearing the fastening member is smaller than that when the fastening member is disposed in the vehicle-height direction. The vehicle lower structure can further reduce the possibility of the fastening members that fasten the first suspension member 30A and the battery pack 10 to each other being sheared at the time of a collision.

### Modifications of Second Embodiment

The second embodiment can be implemented with the following modifications. The second embodiment and the following modifications of the second embodiment can be implemented in combination with each other as long as there is no technical contradiction.

The second suspension member 30B does not have to include the projection 33R and the projection 33L that extend downward in the vehicle-height direction. The first suspension member 30A does not have to include the projections that extend downward in the vehicle-height direction.

The second suspension member 30B and the flange 17A do not have to be fastened to each other with the fastening member 34R disposed in the horizontal direction. For example, the second suspension member 30B and the flange 17A may be fastened to each other with the fastening member 34R that is disposed in the vehicle-height direction. Similarly, the second suspension member 30B and the flange 18A do not have to be fastened to each other with the fastening member 34L disposed in the horizontal direction. For example, the second suspension member 30B and the flange 18A may be fastened to each other with the fastening member 34L that is disposed in the vehicle-height direction.

The through-hole 35L provided in the second suspension member 30B does not have to be inclined relative to the vehicle-length direction such that the through-hole 35L is inclined outward in the vehicle-width direction toward the central side in the vehicle-length direction as long as the through-hole 35L extends in the horizontal direction. The through-hole 35R provided in the second suspension member 30B does not have to be inclined relative to the vehicle-length direction such that the through-hole 35R is inclined outward in the vehicle-width direction toward the central side in the vehicle-length direction as long as the through-hole 35R extends in the horizontal direction. Similarly, each through-hole provided in the first suspension member 30A does not have to be inclined relative to the vehicle-length direction such that the through-hole is inclined outward in the vehicle-width direction toward the central side in the vehicle-length direction as long as the through-hole extends in the horizontal direction.

### Other Modifications

In addition, the following are other elements that can be modified in common between the embodiments. The following modifications can be implemented in combination with each other as long as there is no technical contradiction.

The length of the central portion 11A in the vehicle-width direction may be longer than the length of the portion of the first suspension member 30A extending in the vehicle-width direction. The length of the central portion 11B in the vehicle-width direction may be longer than the length of the portion of the second suspension member 30B extending in the vehicle-width direction.

The fastening member that fastens the first suspension member 30A and the battery pack 10 to each other is not limited to a screw. For example, the first suspension member 30A and the battery pack 10 may be fastened to each other with a fastening member that includes a bolt and a nut. The fastening member that fastens the second suspension member 30B and the battery pack 10 to each other is not limited to a screw. For example, the second suspension member 30B and the battery pack 10 may be fastened to each other with a fastening member that includes a bolt and a nut.

### Modifications of Flanges

The inclined portion 15 of the battery pack 10 does not have to include the flange 15A. The inclined portion 16 of the battery pack 10 does not have to include the flange 16A. As long as the first suspension member 30A is fastened to the inclined portion 15 and the inclined portion 16 of the battery pack 10 and the first electromechanical integrated unit 20A is fastened to the first suspension member 30A, when an impact is applied from outside in the vehicle-length direction, the possibility of a collision between the first electromechanical integrated unit 20A and the battery pack 10 can be reduced.

The inclined portion 17 of the battery pack 10 does not have to include the flange 17A. The inclined portion 18 of the battery pack 10 does not have to include the flange 18A. As long as the second suspension member 30B is fastened to the inclined portion 17 and the inclined portion 18 of the battery pack 10 and the second electromechanical integrated unit 20B is fastened to the second suspension member 30B, when an impact is applied from outside in the vehicle-length direction, the possibility of a collision between the second electromechanical integrated unit 20B and the battery pack 10 can be reduced.

### Modifications of Tapered Portions

Of the first tapered portion 19A and the second tapered portion 19B, the battery pack 10 in the vehicle lower structure may include only the first tapered portion 19A. Of the first tapered portion 19A and the second tapered portion 19B, the battery pack 10 may include only the second tapered portion 19B. The battery pack 10 in the vehicle lower structure does not have to include the first tapered portion 19A and the second tapered portion 19B. For example, as long as, in the vehicle lower structure, the first suspension member 30A is fastened to the battery pack 10, the first electromechanical integrated unit 20A is fastened to the first suspension member 30A, and the battery pack 10 and the first electromechanical integrated unit 20A are spaced apart from each other in the vehicle-length direction, it is possible to reduce the possibility of a collision between the first electromechanical integrated unit 20A and the battery pack 10. For example, as long as, in the vehicle lower structure, the second suspension member 30B is fastened to the battery pack 10, the second electromechanical integrated unit 20B is fastened to the second suspension member 30B, and the battery pack 10 and the second electromechanical integrated unit 20B are spaced apart from each other in the vehicle-length direction, it is possible to reduce the possibility of a collision between the second electromechanical integrated unit 20B and the battery pack 10.

### Combinations of First Embodiment and Second Embodiment

In the vehicle lower structure of the first embodiment, each of the first suspension member 30A and the second suspension member 30B includes the through-hole extending in the vehicle-height direction. In the vehicle lower structure of the second embodiment, each of the first suspension member 30A and the second suspension member 30B includes the through-hole extending in the horizontal direction. The direction in which the through-holes of the first suspension member 30A and the second suspension member 30B extend may be changed as appropriate. For example, when the first suspension member 30A includes a through-hole that extends in the vehicle-height direction, the second suspension member 30B may include a through-hole that extends in the horizontal direction. For example, the second suspension member 30B may include the through-hole 35L that extends in the vehicle-height direction, and the through-hole 35R that extends in the horizontal direction.

As long as, in the vehicle lower structure, the first suspension member 30A is fastened to the battery pack 10, the first electromechanical integrated unit 20A is fastened to the first suspension member 30A, and the battery pack 10 and the first electromechanical integrated unit 20A are spaced apart from each other in the vehicle-length direction, the second suspension member 30B does not have to be fastened to the battery pack 10. As long as, in the vehicle lower structure, the first suspension member 30A is fastened to the battery pack 10, the first electromechanical integrated unit 20A is fastened to the first suspension member 30A, and the battery pack 10 and the first electromechanical integrated unit 20A are spaced apart from each other in the vehicle-length direction, the second electromechanical integrated unit 20B does not have to be fastened to the second suspension member 30B. As long as, in the vehicle lower structure, the first suspension member 30A is fastened to the battery pack 10, the first electromechanical integrated unit 20A is fastened to the first suspension member 30A, and the battery pack 10 and the first electromechanical integrated unit 20A are spaced apart from each other in the vehicle-length direction, the battery pack 10 and the second electromechanical integrated unit 20B do not have to be spaced apart from each other in the vehicle-length direction.

As long as, in the vehicle lower structure, the second suspension member 30B is fastened to the battery pack 10, the second electromechanical integrated unit 20B is fastened to the second suspension member 30B, and the battery pack 10 and the second electromechanical integrated unit 20B are spaced apart from each other in the vehicle-length direction, the first suspension member 30A does not have to be fastened to the battery pack 10. As long as, in the vehicle lower structure, the second suspension member 30B is fastened to the battery pack 10, the second electromechanical integrated unit 20B is fastened to the second suspension member 30B, and the battery pack 10 and the second electromechanical integrated unit 20B are spaced apart from each other in the vehicle-length direction, the first electromechanical integrated unit 20A does not have to be fastened to the first suspension member 30A. As long as, in the vehicle lower structure, the second suspension member 30B is fastened to the battery pack 10, the second electromechanical integrated unit 20B is fastened to the second suspension member 30B, and the battery pack 10 and the second electromechanical integrated unit 20B are spaced apart from each other in the vehicle-length direction, the battery pack 10 and the first electromechanical integrated unit 20A do not have to be spaced apart from each other in the vehicle-length direction.

### Supplements

The technical ideas that can be grasped from the embodiments and the modifications will be described.

### Supplement 1

A vehicle lower structure of an electrified vehicle configured to drive drive wheels with electric power stored in a battery cell inside a battery pack, the electrified vehicle including the battery pack disposed under a floor, the vehicle lower structure comprising an electromechanical integrated unit including a motor that is a power source configured to drive the drive wheels, and an electric power control device configured to supply electric power to the motor, wherein: the electromechanical integrated unit is fastened to a suspension member; the electromechanical integrated unit is disposed outward of an outer end of the battery pack in a vehicle-length direction; the suspension member is fastened to the battery pack; and the battery pack and the electromechanical integrated unit are spaced apart from each other in the vehicle-length direction.

### Supplement 2

The vehicle lower structure according to supplement 1, wherein: the suspension member and the electromechanical integrated unit are disposed rearward of the battery pack in the vehicle-length direction; the battery pack includes a tapered portion having a length in a vehicle-width direction that increases from a rear side toward a center in the vehicle-length direction in vehicle top view; the tapered portion includes a central portion that is a rear end of the battery pack in the vehicle-length direction and extends in the vehicle-width direction, and two inclined portions that are inclined outward in the vehicle-width direction from the central portion toward a front side in the vehicle-length direction and connected to side faces of the battery pack; and the suspension member is fastened to the battery pack at the inclined portions.

### Supplement 3

The vehicle lower structure according to supplement 1, wherein: the suspension member and the electromechanical integrated unit are disposed forward of the battery pack in the vehicle-length direction; the battery pack includes a tapered portion having a length in a vehicle-width direction that increases from a front side toward a center in the vehicle-length direction in vehicle top view; the tapered portion includes a central portion that is a front end of the battery pack in the vehicle-length direction and extends in the vehicle-width direction, and two inclined portions that are inclined outward in the vehicle-width direction from the central portion toward a rear side in the vehicle-length direction and connected to side faces of the battery pack; and the suspension member is fastened to the battery pack at the inclined portions.

### Supplement 4

The vehicle lower structure according to supplement 1, wherein: the suspension member includes a first suspension member, and a second suspension member; the electromechanical integrated unit includes a first electromechanical integrated unit, and a second electromechanical integrated unit; the first suspension member and the first electromechanical integrated unit are disposed forward of the battery pack in the vehicle-length direction; the battery pack includes a first tapered portion having a length in a vehicle-width direction that increases from a front side toward a center in the vehicle-length direction in vehicle top view; the first tapered portion includes a central portion that is a front end of the battery pack in the vehicle-length direction and extends in the vehicle-width direction, and two inclined portions that are inclined outward in the vehicle-width direction from the central portion toward a rear side in the vehicle-length direction and connected to side faces of the battery pack; the first suspension member is fastened to the battery pack at the inclined portions; the second suspension member and the second electromechanical integrated unit are disposed rearward of the battery pack in the vehicle-length direction; the battery pack includes a second tapered portion having a length in a vehicle-width direction that increases from the rear side toward the center in the vehicle-length direction in vehicle top view; the second tapered portion includes a central portion that is a rear end of the battery pack in the vehicle-length direction and extends in the vehicle-width direction, and two inclined portions that are inclined outward in the vehicle-width direction from the central portion toward the front side in the vehicle-length direction and connected to the side faces of the battery pack; and the second suspension member is fastened to the battery pack at the inclined portions.

### Supplement 5

The vehicle lower structure according to any one of supplements 2 to 4, wherein: each of the inclined portions includes a flange extending outward in the vehicle-length direction; an upper end of the flange in the vehicle-height direction is located at a position lower than an upper end of the battery pack in the vehicle-height direction; and a part of the suspension member is disposed on an upper face of the flange in the vehicle-height direction.

### Supplement 6

The vehicle lower structure according to supplement 5, wherein: the suspension member is provided with a through-hole extending in the vehicle-height direction; and the suspension member and the flange are fastened to each other with a fastening member disposed, from above in the vehicle-height direction, in the through-hole extending in the vehicle-height direction.

### Supplement 7

The vehicle lower structure according to supplement 5 or 6, wherein: the suspension member includes a projection extending downward in a vertical direction; the projection is provided with a through-hole extending in a horizontal direction; and the projection and the flange are fastened to each other with a fastening member disposed in the through-hole that is provided in the projection and extends in the horizontal direction.

### Supplement 8

The vehicle lower structure according to supplement 7, wherein the through-hole that is provided in the projection and extends in the horizontal direction extends at an inclination relative to the vehicle-length direction such that the through-hole is inclined outward in the vehicle-width direction toward a central side in the vehicle-length direction.

### Supplement 9

The vehicle lower structure according to any one of supplements 6 to 8, wherein: each of the inclined portions includes a riser portion extending from the upper face of the flange to the upper end of the battery pack; the flange includes a wall projecting upward in the vehicle-height direction; the wall faces the suspension member; and the wall is provided at a position where, when the fastening member becomes detached and the suspension member moves toward the battery pack, the suspension member comes into contact with the wall before coming into contact with the riser portion.

## Claims

1. A vehicle lower structure of an electrified vehicle (100) configured to drive drive wheels with electric power stored in a battery cell (14) inside a battery pack (10), the vehicle lower structure comprising:
the battery pack (10) disposed under a floor;
an electromechanical integrated unit (20A, 20B) including
a motor (21A, 21B) that is a power source configured to drive the drive wheels, and
an electric power control device (22A, 22B) configured to supply electric power to the motor (21A, 21B);
a suspension member (30A, 30B), wherein:
the electromechanical integrated unit (20A, 20B) is fastened to the suspension member (30A, 30B);
the electromechanical integrated unit (20A, 20B) is disposed outward of an outer end of the battery pack (10) in a vehicle-length direction;
the suspension member (30A, 30B) is fastened to the battery pack (10); and
the battery pack (10) and the electromechanical integrated unit (20A, 20B) are spaced apart from each other in the vehicle-length direction.

2. The vehicle lower structure according to claim 1, wherein:
the suspension member (30A, 30B) and the electromechanical integrated unit (20A, 20B) are disposed rearward of the battery pack (10) in the vehicle-length direction;
the battery pack (10) includes a tapered portion (19A, 19B) having a length in a vehicle-width direction that increases from a rear side toward a center in the vehicle-length direction in vehicle top view;
the tapered portion (19A, 19B) includes a central portion, and two inclined portions;
the central portion is a rear end of the battery pack (10) in the vehicle-length direction and extends in the vehicle-width direction;
the two inclined portions are inclined outward in the vehicle-width direction from the central portion toward a front side in the vehicle-length direction and connected to side faces of the battery pack (10); and
the suspension member (30A, 30B) is fastened to the battery pack (10) at the inclined portions.

3. The vehicle lower structure according to claim 1, wherein:
the suspension member (30A, 30B) and the electromechanical integrated unit (20A, 20B) are disposed forward of the battery pack (10) in the vehicle-length direction;
the battery pack (10) includes a tapered portion (19A, 19B) having a length in a vehicle-width direction that increases from a front side toward a center in the vehicle-length direction in vehicle top view;
the tapered portion (19A, 19B) includes a central portion, and two inclined portions;
the central portion is a front end of the battery pack (10) in the vehicle-length direction and extends in the vehicle-width direction;
the two inclined portions are inclined outward in the vehicle-width direction from the central portion toward a rear side in the vehicle-length direction and connected to side faces of the battery pack (10); and
the suspension member (30A, 30B) is fastened to the battery pack (10) at the inclined portions.

4. The vehicle lower structure according to claim 2 or 3, wherein:
each of the inclined portions includes a flange extending outward in the vehicle-length direction;
an upper end of the flange is located at a position lower than an upper end of the battery pack (10) in a vehicle-height direction; and
a part of the suspension member (30A, 30B) is disposed on an upper face of the flange in the vehicle-height direction.

5. The vehicle lower structure according to claim 4, wherein:
the suspension member (30A, 30B) is provided with a through-hole extending in the vehicle-height direction; and
the suspension member (30A, 30B) and the flange are fastened to each other with a fastening member disposed in the through-hole from above in the vehicle-height direction.

6. The vehicle lower structure according to claim 4, wherein:
the suspension member (30A, 30B) includes a projection extending downward in a vertical direction;
the projection is provided with a through-hole extending in a horizontal direction; and
the projection and the flange are fastened to each other with a fastening member disposed in the through-hole.

7. The vehicle lower structure according to claim 6, wherein the through-hole extends at an inclination relative to the vehicle-length direction such that the through-hole is inclined outward in the vehicle-width direction toward a central side in the vehicle-length direction.

8. The vehicle lower structure according to claim 5, wherein:
each of the inclined portions includes a riser portion extending from the upper face of the flange to the upper end of the battery pack (10);
the flange includes a wall projecting upward in the vehicle-height direction;
the wall faces the suspension member (30A, 30B); and
the wall is provided at a position where, when the fastening member becomes detached and the suspension member (30A, 30B) moves toward the battery pack (10), the suspension member (30A, 30B) comes into contact with the wall before coming into contact with the riser portion.
